Europäisches Patentamt

European Patent Office

Office européen des brevets

(11) Publication number: **0 208 657**
**A2**

# (12) EUROPEAN PATENT APPLICATION

(21) Application number: **86830100.3**

(22) Date of filing: **30.04.86**

(51) Int. Cl.⁴: **H 02 K 29/06**
**H 02 P 6/02**

(30) Priority: **03.05.85 IT 342685**

(43) Date of publication of application:
**14.01.87 Bulletin 87/3**

(84) Designated Contracting States:
**AT BE CH DE FR GB LI LU NL SE**

(71) Applicant: **Merlo, Carmelo**
**Via Umberto I, 95**
**Acciarello Di Villa S. Giovanni Reggio Calabria(IT)**

(72) Inventor: **Merlo, Carmelo**
**Via Umberto I, 95**
**Acciarello Di Villa S. Giovanni Reggio Calabria(IT)**

(74) Representative: **Trentini, Ermanno**
**Studio Brevetti Internazionali Ing. E. Trentini Via U. Lenzi, 2**
**I-40122 Bologna(IT)**

(54) Electronic-reverse self-synchronous electric motor.

(57) This invention relates to a new, alternating current (AC) electric motor, the main feature of which resides in the perfect rotational stability between rotor and the stator rotating field which is achieved by rotor drag imposed by the stator rotating field to which the rotor is magnetically coupled and in the possibility of being able to vary rotation speed at any time by means of a regulator.

fig. 1

# ELECTRONIC-REVERSE SELF-SYNCHRONOUS ELECTRIC MOTOR. .

The invention relates to an AC powered motor which a variable frequency achieved by converting the mains direct current (DC) into alternating current by means of a multi-phase reverse circuit which powers the motor's stator while the rotor is either running on direct current or is designed with permanent magnets.

The stator's AC-power input implies synchronism, typical of synchronous AC-drive motors, wherein the speed of rotation must be directly connected to the input voltage frequency. The concept employed by this invention to solve the problem is related to the successful synchronized running of the motor which, because it can implement said running in its own right, shall hereinafter be defined 'Self-synchronous'.

With particular reference to motors of this type currently available on the market, it can be said that there are in actual fact no such motors in existence.

The 'electronic changeover DC-motor', which might in appearance be confused with the self- synchronous motor, is in reality technically different as the electronic circuit in this motor acts as a voltage switch in the different sections of the stator coil. It is also much different conceptually in that its running depends on the electrodynamic forces generated between the magnetic field and a conductor through which current within said field runs, whereas the self-synchronous motor, as will be evident below, is based on the polar rotary wheel drag by the stator's rotating field to which it is linked.

This invention therefore relates to a new type of electric motor designed on the principle of self-synchronism defined as the property of the rotor to determine the synchronism of rotation between the stator's rotating field and the rotor itself at any given motor revolutions so as to overcome the drawbacks typical of synchronous motors which must be driven at a strictly constant speed and are not self-starting.

These and other object of the invention will become more apparent in the following simplified description which is to be interpreted as illustrative and not in a limiting sense, taken in conjunction whith the accompanying draw ings is which:

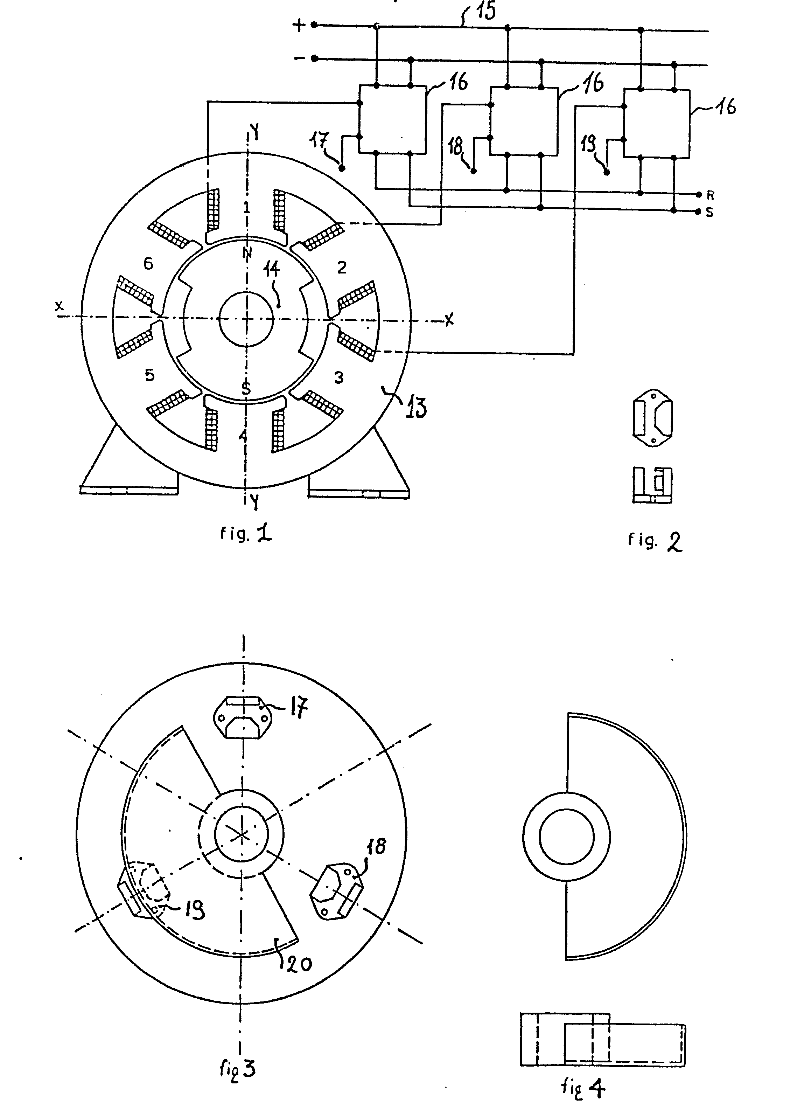

Tab.1, Fig.1, illustrates the cross-section of a three-phase self-synchronous motor which a two-pole rotor;

Fig.2, illustrates a, over- and profile-view of a Hal-effect magnetic switch;

Fig.3, illustrates a front view of the fan-side cap;

Fig.4, illustrates a bottom- and profile-view of the rotary shutter which opens and closes the three switches;

Numbers 1,2,3,4,5,6 refer to the poles of stator 13 and connected to each other within stator's clearance, the whole being symmetrical with respect to axes X and Y.

The rotor 14 can be wound or have permanent magnets.

In the first instance, the rotating field is generated by the current in the rotor winding connected by a system of brushes and rings to an external source of DC power, whereas in the second instance, specifically intended for low power input, the field is generated by two permanent magnets fitted to the rotor's surface.

The coil of stator pole 1 and the coil of stator pole 4 are connected to each other so that the magnetizing current running between them produces two poles of apposite polarity. The coils of stator poles 2 and 5 and the coils of stator poles 3 and 6 are connected in the same way. The three coil pairs are in turn connected by a Y-connection and constitute as a whole the three-phase stator winding of the motor. The stator winding is connected to the DC-input power line 15 by means of the three-phase electronic reverser 16, i.e. an electronic circuit which sequentially reverses current flow direction in the motor's three phases by means of proper command signals.

In effect the three-phase electronic reverse switch transforms the incoming DC power into a tern of alternating currents to form the three-phase stator feed of the motor having a frequency which increases as the rotor's rotation speed increases and falls to zero when rotor is off.

A command electrode S cuts out the three-phase reverse in case running is completely halted and shuts off the motor. Another electrode R performs two functions, i.e. first, it revolves motor in the desired direction, and second, it magnetically brakes the rotor in whatever direction it is turning when necessary.

The reverse command signals are imparted to the three-phase reverse switch 16 by electronic switches 17, 18, 19 without Hal-effect contact and they can, for example, be fitted on the cooling fan-side to the outside of motor's cap.

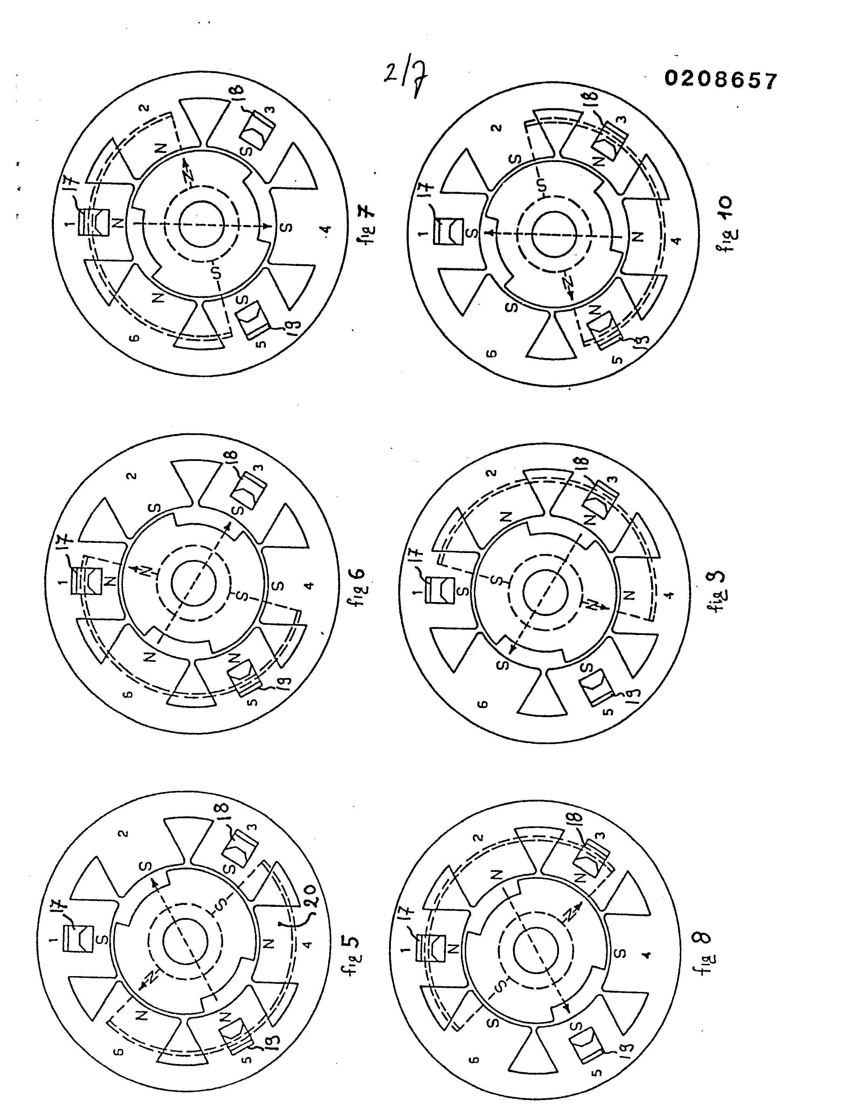

Referring to Fig.3, the three switches are so fitted that the symmetry axis of each switch coincides with the simmetry axis of one pair of opposing poles in the stator core laminations pack.

Fig.4, illustrates the bottom- and profile-view, with an outline of the internal parts, of the rotating shutter 20, externally splined on to the motor's shaft, cooling fan-side. Fig.3, shows this shutter opening and closing the Hal-effect magnetic switches.

Fig.5 in Tab.2, illustrates how the rotor synchronizes rotation between the stator's magnetic field and the rotor's. Upon the motor's cross-section a front view of the shutter-switches assembly is projected as if the cap on which the switches are fitted were transparent and, for reasons of clarity, the rotating shutter is outlined as if semitransparent. The sequence of Figs. 5,6,7,8,9,10, in Tab.2, shows the rotor field's symmetry axis, marked by an arrow lying on the axis dividing the solid from the hollow part of the shutter, with the point going out from the rotor pole facing north, while the symmetry axis of the stator's rotating field is marked by an arrow passing through the geometric centre of the motor with the point turned in · toward the centre line of one of the six stator poles, each of which is different in the six figures of the sequence shown.

Fig.5, shows the creation of a pair of forces to turn the rotor clockwise through the action of the electromagnetic forces generated between the stator and rotor poles, given the stator polarities illustrated.

Fig.6, shows how the rotor, by turning clockwise, closes switch by means of the shutter causing clockwise rotation of the stator field by 1/6 revolution before the rotor can reach the position in which the symmetry axis of its own magnetic field coincides in direction and side with the stator field's symmetry axis, the position in which the motor's torque would fail thus preventing rotor stop at dead center and enabling the rotor to continue turning. The stator's magnetic field rotation mechanism is sequentially repeated at each opening and closing of each of the three switches.

The sequence shown in Tab.2, shows how the rotor's rotation causes the sequence of the six polarity reversals of the three stator pole pairs and the consequent rotation of the arrow representing the stator field's symmetry axis by one complete revolution (in steps of one-sixth of a revolution at a time).

It can thus be said that the rotor, with its magnetic field following the stator's rotating field, causes the rotation of the latter in a way synchronous with its own. The direction of the stator's magnetic field must be reversed to turn the motor anticlockwise. For motors having only one direction of rotation, it is sufficient to reverse the three-phase connections on the three-phase reverse switch's outlet terminals, while for motors that must run in both directions of rotation, the on-off signal of the Hal-effect switch must be transformed in an on-off voltage signal by means of a specific electronic circuit with a logic capable of forming signals.

In other words, the on-off signal sequences of the three switches are to be transformed into three sequences of 1 and 0 logic. The three sequences of logic signals will reverse at the same time with a logic reverse circuit, i.e. a 1 at inlet will match a 0 in outlet and a 0 in inlet a 1 in outlet.

The outlet logic signals are sent to the three-phase reverse switch's respective command electrodes, which switch, by changing their state on the basis of the signals, will reverse the current flow direction of the motor's stator winding, thus creating a stator magnetic field with a direction opposite to the existing one before the rotation direction reverse command.

If rotation is reversed while the motor is revolving, the newly formed stator field will brake the rotor until it stops and then restart it in the opposite direction.

The motor's operating principle described thus far is not limited to two-pole motors only but extends as well to any motor with n rotary pole pairs, where n can stand for 1, 2, 3, 4, ......, while the stator has a number of pole pairs equal to 3n.

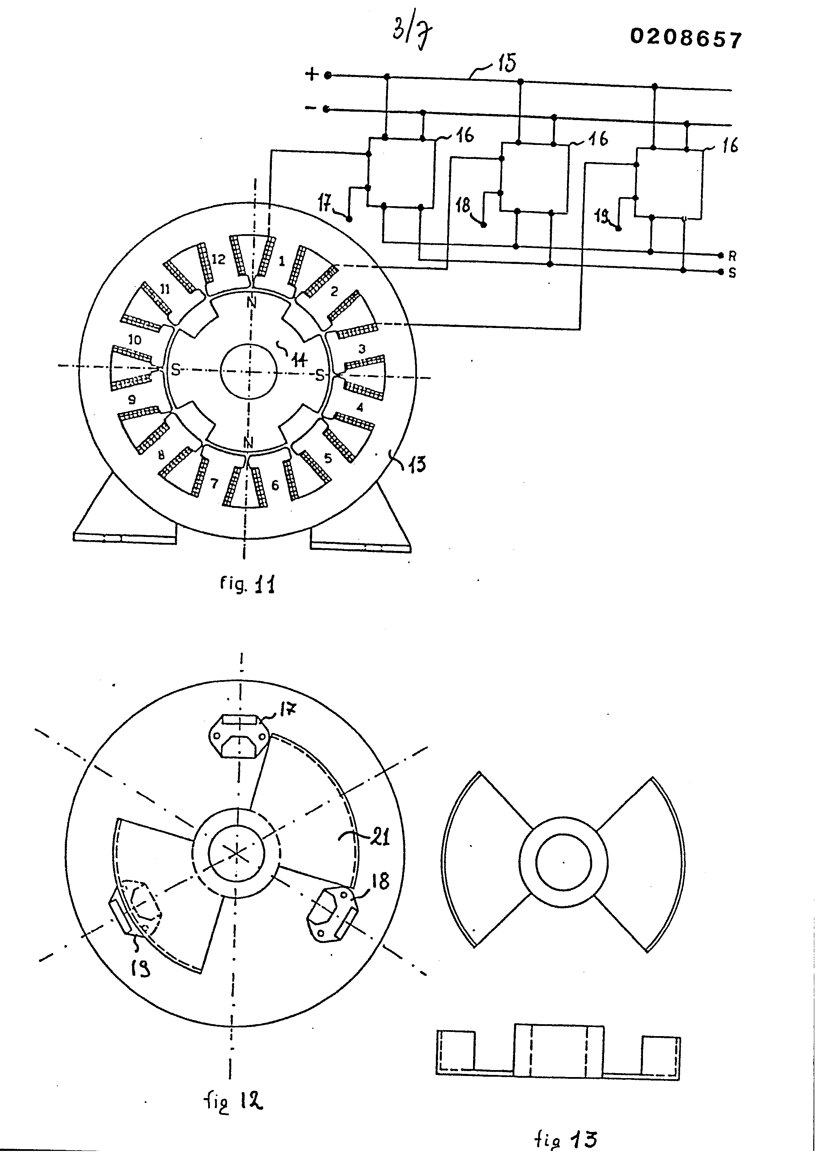

Fig.11, Tab.3, illustrates the cross sectional view of a motor with four rotor poles and twelve stator poles. Fig. 12, Tab.3, is a switch-side front view and Fig.13, Tab.3, is a bottom- and profile-view of rotating shutter 21.

The sequence of reverses with consequent rotation of stator's magnetic field is wholly analogous to that shown for the two-rotor-pole motor, except with double the numbers as the number of rotor poles is double that of the previously described motor.

One consequence of the 'step-rotation' of the stator rotating field is the non-uniform torque and braking couple of the motor.

Fig.14, Tab.4, is a Cartesian diagram showing the torque variation for one complete 360° revolution of a two-rotor-pole motor. It shows that torque varies form a 0.85 minimum to a maximun of 1.

The intersection points of the six curves illustrate the stator field's six phase reverses, i.e. those points whereat the stator field's symmetry axis turns in steps of one sixth of revolution. Maximum torque points coincide with the points in which the stator field's symmetry axis forms two equal angles wit the rotor field's symmetry axis.

With a two-rotor-pole motor, maximum torque is reached when the two axes are 90° apart, since there is only one symmetry axis for both the stator and rotor fields. . This is clearly shown in the vector diagrams in Fig.14, in which the solid-line arrow represents the stotor field axis and the dotted-line arrow he rotor field axis. the beginning and end points of the torque curves in Fig. 14's Cartesian diagram are 180° apart in that the two magnetic axes are directionally coincident every 180° of reciprocal rotation.

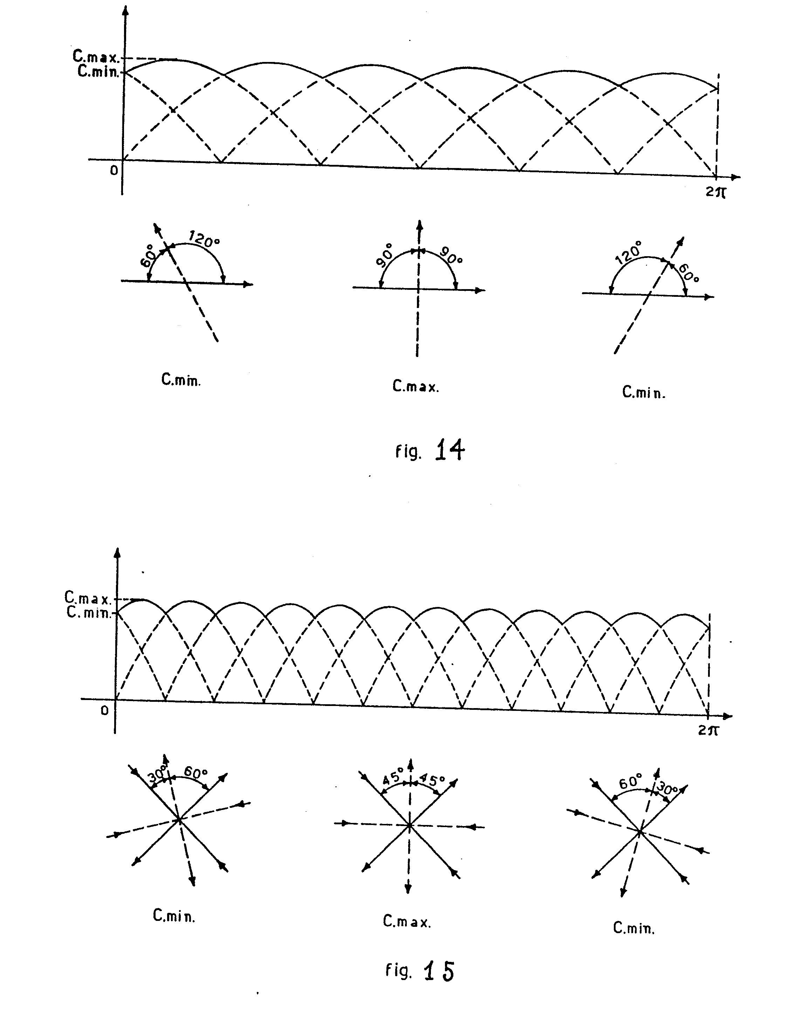

The Cartesian diagram in Fig.15, Tab.4, refers to a four-rotor-pole motor and illustrates torque curve for one complete 360°- revolution. It shows that the beginning and end of the torque curves are 90° apart, since the stator and rotor fields are four-polar with each having two symmetry axes 90° apart from each other. Such symmetry axes coincide every 90° of reciprocal rotation, and the maximum torque points are reached when the symmetry axes of both stator and rotor fields form equal angles with each other, as shown in the vector diagram underneath.

A comparison of the two diagrams in Figs. 14 and 15 reveals that the minimun torque value remains unchanged. Generally speaking, it can be said that a self-synchronous three-phase motor with any given number of rotor poles will have a minimum starting torque equal to approximately 0.85 the value of maximum torque.

The self-synchronous motor can also be built in a two-phase version. In this event, the stator pole coils are connected to each other so as to form two distinct stator windings which are electrically separate from one another, i.e. the stator's four power terminals are to be connected to two independent elecctronic reverse switches.

The motor is analogous in operation to the three-phase one yet differs from the latter in that the rotating stator field turns at greater or wider steps that the three-phase motor. For example, the rotating stator field in a two-phase motor with bi-polar rotor turns in steps of one-fourth of revolution.

The two-phase design, in comparison with the three-phase one, with the magnetic sizing being equal, yields a motor with a lower minimum starting torque, a greater rotational torque ripple, with a consequent lower average value, and a higher number of electronic power components, with the resulting overall cost increase of the motor's electronic unit. As with the three-phase, the two-phase motor can also be designed with any number n of rotor poles. An eventual four-phase design, i.e. a motor with four stator windings, should be considered only when the small torque increase which this design yields, given the stator field's greater uniformity of rotation, is of fundamental importance.

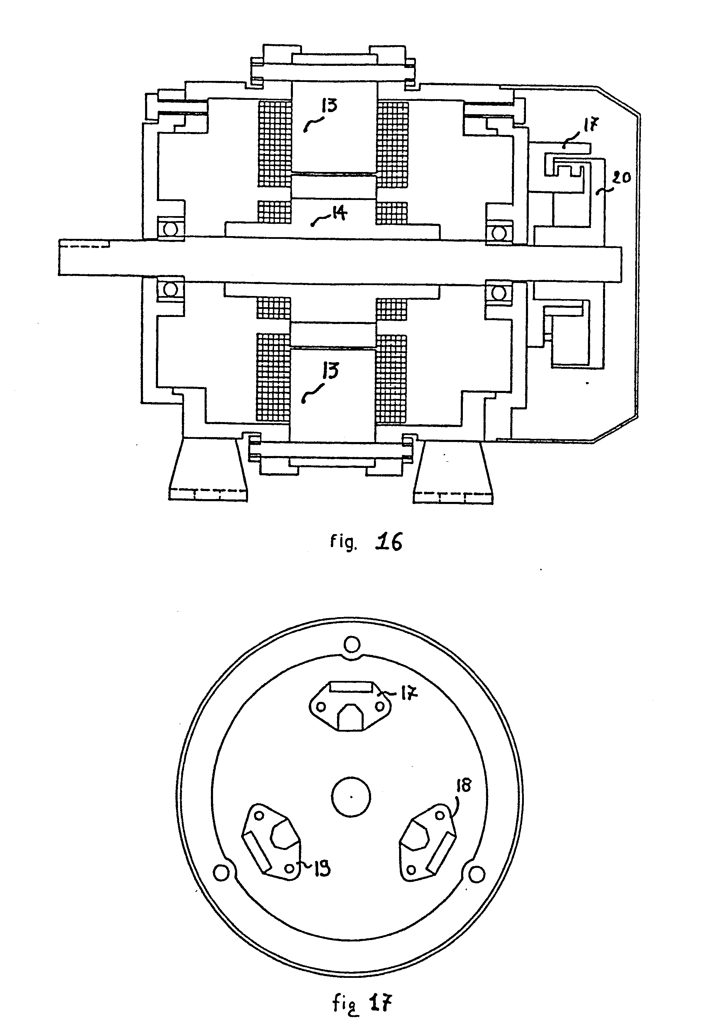

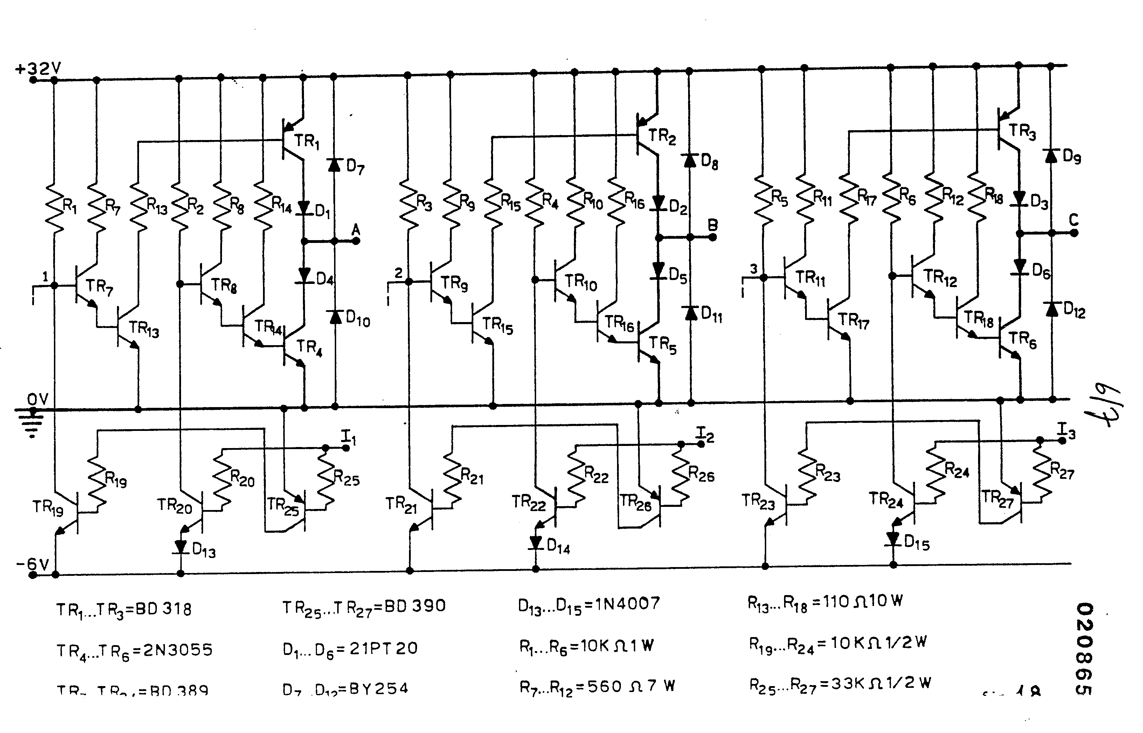

Figs. 16 and 17, in Tab.5, 18 in Tab.6, and 19 in Tab.7, refer to a design of a three-phase motor with two-pole rotor and six-pole stator which serves to demonstrate the operating principle.

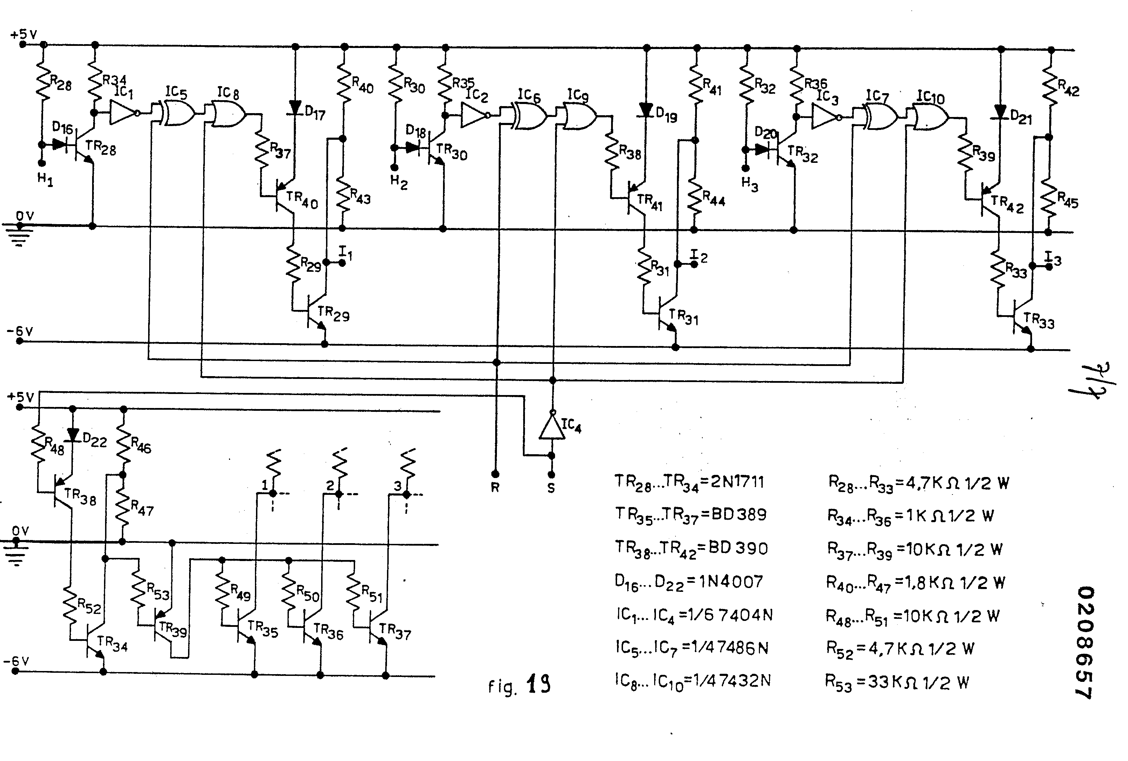

Fig.16, shows the lengthwise section of the overall motor, Fig.17, is a cooling-fan-side front view of the shield on which the three Hal-effect switches are fitted, Fig.18, shows the electrical wiring with a description of the components used in the three-phase reverse switch, Fig.19, illustrates the generator circuits of the digital-processing signals for the three-phase reverse switch control and the complete motor shut-off.

Having thus described the invention, it is not intended that it be so limited as changes in design details, dimensions, materials, form and the like may be readily made therein without departing from the scope of the invention.

P A T E N T    C L A I M S

1.  Electronic-reverse self-synchronous electric motor,
    wherein the transformation of the DC mains power
    into AC power for the stator occurs by means of a
    multi-phase electronic reverse mechanism commanded by
    as many electronic switches, without Hal-effect
    contacts, as phases. Said switches are alternately opened
    and closed by a rotating shutter splined to the motor's
    shaft.

2.  Electronic-reverse self-synchronous electric motor,
    as claimed in Claim 1 wherein the rotor automatically
    achieves the rotational synchronism between the stator's
    magnetic field and the polar rotary wheel, and the
    rotor creates a stator magnetic field sufficient to
    produce a starting torque with motor idle and, while
    the motor is running, the rotor's own rotation causes
    the stator field rotation, thus resulting in self-
    synchronism at any motor r.p.m., for the rotor, with
    its magnetic field following the rotating field of
    the stator, causes the latter's rotation in a way
    synchronous to its own.

3.  Electronic-reverse self-synchronous electric motor,
    as claimed in the preceding claims wherein the rotor
    slows its rotational speed without losing synchronism
    whenever, under normal motor running conditions, the
    stall torque applied to the drive shaft exceeds the
    motor's torque. Since stator field rotation is connected to rotor rotation, the stator field slows in synchronism with the rotor, a synchronism which is retained even when the stall torque stops the motor and makes it turn in the opposite direction. Therefore, in the self-synchronous motor there is no critical load angle beyond which the motor falls out of synchronism and stops as occurs with the synchronous motors.

4. Electronic-reverse self-synchronous electric motor, as claimed in the preceding claims wherein, under normal motor running conditions, each rotational step of the rotating stator field is accompanied by an angle movement between the field itself and the polar rotary wheel; said movement is limited to the angle amplitude of each single rotational step of the rotating stator field.

5. Electronic-reverse self-synchronous electric motor, as claimed in the preceding claims wherein the angle movement between the stator field and rotor, a movement caused by the non-uniform speed of the stator field and occurring in variable amplitude steps, is less pronounced in the three-phase version than in the two-phase version.

6. Electronic-reverse self-synchronous electric motor, as claimed in the preceding claims wherein, with motor running but rotor idle, as occurs in the first seconds of start-up, the stator is powered at zero frequency, i.e. in direct current, whereas as soon as the rotor begins to rotate, stator power voltage changes from direct to alternating with the frequency being determined by the rotor's rotational speed.

7.  Electronic-reverse self-synchronous electric motor,
    as claimed in the preceding claims wherein the
    stator phases in the three-phase version can only be
    connected using a Y connection, a double Y connection,
    and the like, but not a triangle connection as that
    used with synchronous and asynchronous three-phase
    motors the stator phases of which can be connected
    either by a Y or a triangle connection.

fig. 1

fig. 2

fig 3

fig 4

2/7

0208657

fig 7

fig 10

fig 6

fig 9

fig 5

fig 8

fig. 11

fig 12

fig 13

0208657

C.max.
C.min.

0

2π

60° 120°

C.min.

90° 90°

C.max.

120° 60°

C.min.

fig. 14

C.max.
C.min.

0

2π

30° 60°

C.min.

45° 45°

C.max.

60° 30°

C.min.

fig. 15

fig. 16

fig. 17

+32V

$TR_1$  $TR_2$  $TR_3$

$D_7$  $D_8$  $D_9$

$R_1$ $R_7$ $R_{13}$ $R_2$ $R_8$ $R_{14}$  $D_1$  $R_3$ $R_9$ $R_{15}$ $R_4$ $R_{10}$ $R_{16}$  $D_2$  $R_5$ $R_{11}$ $R_{17}$ $R_6$ $R_{12}$ $R_{18}$  $D_3$

A  B  C

$D_4$  $D_5$  $D_6$

1  $TR_7$  $TR_8$  2  $TR_9$  $TR_{10}$  3  $TR_{11}$  $TR_{12}$

$D_{10}$  $D_{11}$  $D_{12}$

$TR_{13}$  $TR_{14}$  $TR_4$  $TR_{15}$  $TR_{16}$  $TR_5$  $TR_{17}$  $TR_{18}$  $TR_6$

0V

$I_1$  $I_2$  $I_3$

$R_{19}$  $R_{20}$  $R_{25}$  $R_{21}$  $R_{22}$  $R_{26}$  $R_{23}$  $R_{24}$  $R_{27}$

$TR_{19}$  $TR_{20}$  $TR_{25}$  $TR_{21}$  $TR_{22}$  $TR_{26}$  $TR_{23}$  $TR_{24}$  $TR_{27}$

$D_{13}$  $D_{14}$  $D_{15}$

-6V

| | | | |
|---|---|---|---|
| $TR_1...TR_3$ = BD 318 | $TR_{25}...TR_{27}$ = BD 390 | $D_{13}...D_{15}$ = 1N4007 | $R_{13}...R_{18}$ = 110 $\Omega$ 10 W |
| $TR_4...TR_6$ = 2N3055 | $D_1...D_6$ = 21PT 20 | $R_1...R_6$ = 10K $\Omega$ 1 W | $R_{19}...R_{24}$ = 10K $\Omega$ 1/2 W |
| $TR_7...TR_{24}$ = BD 389 | $D_7...D_{12}$ = BY254 | $R_7...R_{12}$ = 560 $\Omega$ 7 W | $R_{25}...R_{27}$ = 33K $\Omega$ 1/2 W |

020865

$R_{28}...R_{33} = 4{,}7K\Omega\ 1/2\ W$

$R_{34}...R_{36} = 1K\Omega\ 1/2\ W$

$R_{37}...R_{39} = 10K\Omega\ 1/2\ W$

$R_{40}...R_{47} = 1{,}8K\Omega\ 1/2\ W$

$R_{48}...R_{51} = 10K\Omega\ 1/2\ W$

$R_{52} = 4{,}7K\Omega\ 1/2\ W$

$R_{53} = 33K\Omega\ 1/2\ W$

$TR_{28}...TR_{34} = 2N1711$

$TR_{35}...TR_{37} = BD389$

$TR_{38}...TR_{42} = BD390$

$D_{16}...D_{22} = 1N4007$

$IC_1...IC_4 = 1/6\ 7404N$

$IC_5...IC_7 = 1/4\ 7486N$

$IC_8...IC_{10} = 1/4\ 7432N$

fig. 19